(19) Europäisches Patentamt
European Patent Office
Office européen des brevets

(11) **EP 2 514 630 A1**

(12) **EUROPEAN PATENT APPLICATION**
published in accordance with Art. 153(4) EPC

(43) Date of publication:
**24.10.2012 Bulletin 2012/43**

(51) Int Cl.:
***B60N 2/20*** *(2006.01)* ***B60N 2/06*** *(2006.01)*
***B60N 2/14*** *(2006.01)*

(21) Application number: **10837327.5**

(22) Date of filing: **07.09.2010**

(86) International application number:
**PCT/JP2010/065300**

(87) International publication number:
**WO 2011/074297 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.12.2009 JP 2009286263**
**20.04.2010 JP 2010096764**

(71) Applicant: **Toyota Shatai Kabushiki Kaisha**
**Kariya-shi**
**Aichi 448-0002 (JP)**

(72) Inventors:
• **KUBO, Takahiro**
**Kariya-shi**
**Aichi 448-0002 (JP)**
• **SUZUKI, Akihito**
**Kariya-shi**
**Aichi 448-0002 (JP)**
• **HIRAKAWA, Tomoya**
**Kariya-shi**
**Aichi 448-0002 (JP)**

(74) Representative: **Chettle, Adrian John et al**
**Withers & Rogers LLP**
**4 More London Riverside**
**London**
**SE1 2AU (GB)**

(54) **VEHICLE SEAT**

(57) It is an object of the present invention to omit a pulse sensor or other such devices, thereby making it possible to perform position control of a construction member of a vehicle seat at low cost.

A vehicle seat of the present invention is configured to operate a construction member utilizing a rotative force of a motor, which may include a current detection means configured to detect a load current (Vi) of the motor, a voltage detection means configured to detect a power source voltage (Vb) of the motor, and a position computing means configured to compute a rotating speed (N) of the motor each time at intervals of a predetermined time ($\Delta$T) utilizing the load current value (Vi) detected by the current detection means and the voltage value (Vb) detected by the voltage detection means, and to compute a position (W) of the construction member (a reclining angle (W)) based on the rotating speed (N) computed each time at intervals of the predetermined time ($\Delta$T).

FIG. 5

EP 2 514 630 A1

**Description**

TECHNICAL FIELD

The present invention relates to a vehicle seat configured to operate a construction member utilizing a rotative force of a motor.

BACKGROUND ART

A related vehicle seat is described in Patent Document 1.

The vehicle seat described above has a longitudinal slide mechanism longitudinally sliding a seat main body (a construction member) within a vehicle cabin. The longitudinal slide mechanism is a mechanism that is configured to longitudinally slide the seat main body utilizing threadably engagement action between a ball screw and a nut, which mechanism is constructed to rotate the ball screw by a motor.

Usually, the motor of the longitudinal slide mechanism has a pulse sensor attached thereto, so that a pulse can be output each time the motor rotates by a predetermined angle. Therefore, it is possible to obtain the number of rotation of the motor, i.e., the number of rotation of the ball screw by integrating output pulses of the pulse sensor. Further, it is possible to compute a sliding amount of the seat main body (a position of the seat main body with respect to an original point) based on the number of rotation of the ball screw.

Thus, it is possible to automatically stop the motor when the seat main body reaches, for example, an advance limit position or a retreat limit position.

PRIOR ART DOCUMENT

PATENT DOCUMENT

Patent Document 1: Japanese Patent Application Laid-Open No. 2009-248839

SUMMARY OF THE INVENTION

PROBLEMS TO BE SOLVED BY THE INVENTION

However, in the vehicle seat described above, it is necessary to use a motor having a pulse sensor. Further, it is necessary to use a special cable for connecting the pulse sensor to an ECU of a vehicle. Further, the ECU must have a pulse integration function.

As a result, costs for performing position control of the seat main body can be increased.

The present invention is made in order to solve the above problem. It is an object of the present invention to omit a pulse sensor or other such devices, thereby making it possible to perform position control of a construction member of a vehicle seat at low cost.

MEANS FOR SOLVING THE PROBLEMS

The object described above can be solved by the invention as defined in each of the claims.

The invention described in claim 1 provides a vehicle seat configured to operate a construction member utilizing a rotative force of a motor, which may include a current detection means configured to detect a load current of the motor, a voltage detection means configured to detect a power source voltage of the motor, and a position computing means configured to compute a rotating speed of the motor each time at intervals of a predetermined time utilizing the load current value detected by the current detection means and the voltage value detected by the voltage detection means, and to compute a position of the construction member based on the rotating speed computed each time at intervals of the predetermined time.

According to the present invention, the rotating speed of the motor is computed utilizing the load current value of the motor. Therefore, even when a load of the motor is increased or reduced due to a weight of a sitting person or other such factors, the rotating speed of the motor can be computed accurately. In addition, because the position of the construction member is computed based on the rotating speed of the motor, the position of the construction member can be obtained accurately.

As a result, it is possible to omit devices for detecting the position of the construction member, e.g., a pulse sensor to be attached to the motor and a pulse integration means. Thus, it is possible to achieve a reduction in cost due to the omission.

In the invention described in claim 2, the position computing means is configured to compute the rotating speed of the motor based on an averaged load current value in the predetermined time and an averaged power source voltage value in the predetermined time.

Thus, computing precision of the rotating speed of the motor can be increased.

In the invention described in claim 3, power feeding to the motor can be stopped when the position of the construction member computed by the position computing means becomes equal to a predetermined position in a condition in which an operating switch of the motor is turned on.

Thus, unnecessary power cannot be supplied to the motor. This may avoid waste. Further, the motor can be prevented from being applied with an excessive force.

In the invention described in claim 4, the vehicle seat includes a seat back as the construction member, the seat back being configured to change an inclination angle thereof with respect to a seat cushion, and a reclining device that is capable of adjusting the inclination angle of the seat back utilizing the rotative force of the motor.

In the invention described in claim 5, the vehicle seat further includes a rotation mechanism that is configured to horizontally rotate a seat main body from a vehicle forward-facing position to a laterally-facing position facing a door opening, and an outer slide mechanism that is configured to slide the seat main body from a vehicle interior to a vehicle exterior via the door opening, wherein the outer slide mechanism is composed of a pair of slide rails extended in a sliding direction and sliders supporting the seat main body, the sliders being slidable along the slide rails, wherein the slide rails respectively include horizontally extended rail straight portions and downwardly curved rail curved portions that are positioned in distal end sides of the rail straight portions, and wherein when the sliders supporting the seat main body slide along the rail curved portions of the slide rails toward distal ends thereof, the seat cushion of the seat main body can be gradually tilted in a direction in which a front side thereof is lowered in the vehicle exterior.

According to the present invention, the rail straight portions of the slide rails of the outer slide mechanism extend horizontally. Therefore, the seat main body can be moved from the vehicle interior to the vehicle exterior while keeping the same height. That is, the seat main body in the vehicle exterior may have the same height as the seat main body in the vehicle interior, so that a height dimension from the ground to a sitting position of the seat main body can be relatively increased.

Further, when the sliders of the seat main body slide along the rail curved portions of the slide rails toward distal ends thereof, the seat cushion can be gradually tilted in a direction in which the front side thereof is lowered in the vehicle exterior. As a result, a passenger sitting in the seat cushion can gently lower the feet to the ground and stand up while the passenger stretches the knees from a relatively high position. Thus, because the passenger can get in and out of the vehicle while stretching the knees stretched, for example, an aged person with weak leg muscles can get in and out of the vehicle unaided.

In the invention described in claim 6, the sliders are vertically rotatably connected to the seat main body.

Thus, the sliders can be smoothly slid from the rail straight portions of the slide rails to the rail curved portions of the slide rails.

In the invention described in claim 7, the seat main body has a reclining mechanism that is configured to adjust inclination of the seat back with respect to the seat cushion, wherein the seat back can be tilted by the reclining device when the seat cushion is gradually tilted in the direction in which the front side thereof is lowered in the vehicle exterior.

Thus, when the seat cushion of the seat main body is gradually tilted in the direction in which the front side thereof is lowered in the vehicle exterior, the inclination of the seat back can be adjusted such that the passenger can be easily stand up.

EFFECTS OF THE INVENTION

According to the present invention, it is possible to perform position control of a construction member constituting a vehicle seat at low cost.

BRIEF DESCRIPTION OF THE DRAWINGS

FIG. 1 is a schematic perspective view of a vehicle seat according to Embodiment 1 of the present invention.
FIG. 2 is a schematic side view illustrating a reclining function of the vehicle seat.
FIG. 3 is a block diagram schematically illustrating a reclining device of a seat back.
FIG. 4 is a schematic diagram illustrating a drive circuit of a motor.
FIG. 5 is a set of graphs illustrating procedures for obtaining a reclining angle of the seat back.

FIG. 6 is a flowchart illustrating an operation of the reclining device.

FIG. 7 is a schematic longitudinal sectional view of a vehicle seat according to Embodiment 2 of the present invention.

FIG. 8 is a partially sectional schematic view illustrating a vehicle seat as viewed from a front side (a view as viewed from a direction shown by line VIII-VIII of FIG. 7).

FIG. 9(A) is a perspective view (partly cutaway) of a slide rail and a slider of the vehicle seat, and FIG. 9(B) is a schematic view illustrating a drive mechanism.

FIG. 10 is a side view illustrating tilting motion of the vehicle seat.

FIG. 11 is an overall side view illustrating the tilting motion of the vehicle seat.

FIG. 12 is a time chart illustrating motion of the vehicle seat.

FIG. 13(A) is a side view illustrating motion of a conventional vehicle seat, and FIG. 13(B) is a side view illustrating a seat main body positioned in a getting in/out position.

MODE FOR CARRYING OUT THE INVENTION

[Embodiment 1]

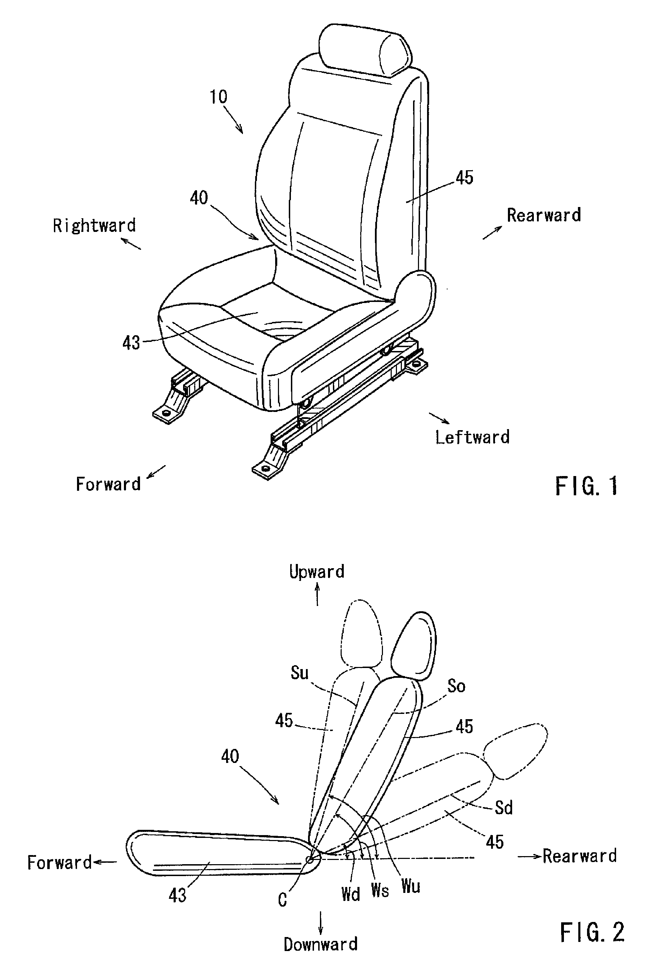

In the following, a reclining device of a vehicle seat according to Embodiment 1 of the present invention will be described with reference to FIGS. 1 to 6.

Further, forward and rearward, rightward and leftward, and upward and downward in the drawings respectively correspond to forward and rearward, rightward and leftward, and upward and downward of a vehicle seat.

<Outline of Construction of Vehicle Seat 10>

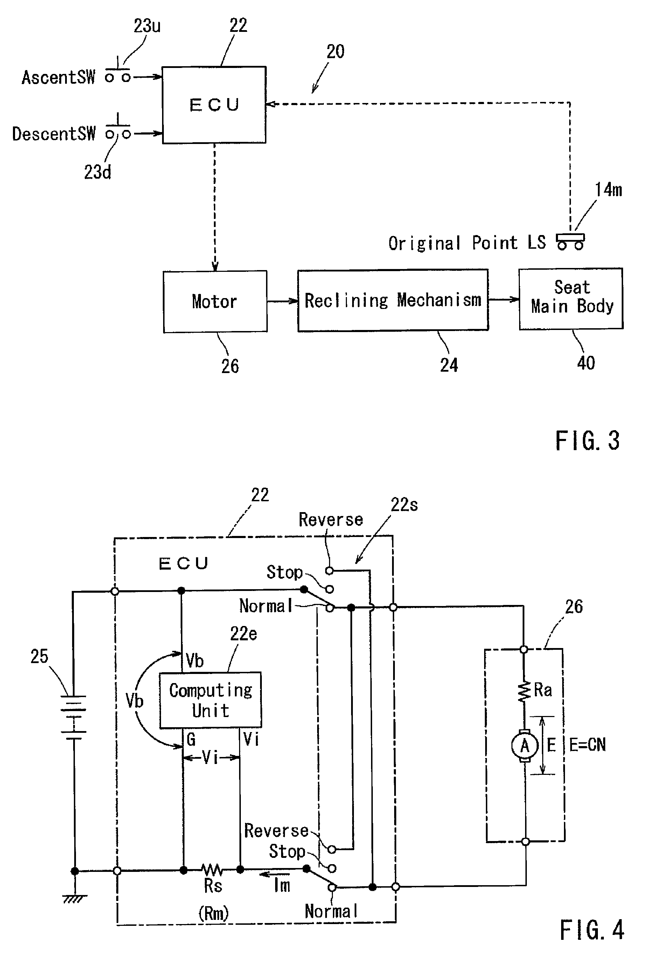

The vehicle seat 10 is a seat disposed in a vehicle cabin of a passenger vehicle. As shown in FIG. 1, the vehicle seat 10 has a seat main body 40 and a reclining device 20 (FIG. 3) for the seat main body 40.

The seat main body 40 is composed of a seat cushion 43 and a seat back 45. The seat back 45 is constructed to be tilted within a predetermined range with respect to the seat cushion 43 by action of the reclining device 20.

<Regarding Reclining Device 20>

The reclining device 20 is a device for adjusting an inclination angle of the seat back 45 of the seat main body 40. As shown in FIG. 3, the reclining device 20 is mainly composed of a reclining mechanism 24 for tilting the seat back 45, a motor 26 for operating the reclining mechanism 24, and a control device 22 (ECU) for controlling the motor 26. The motor 26 is a DC brush motor. As shown in FIG. 4, the motor 26 is constructed to be driven by a battery 25 of the passenger vehicle.

As shown in FIG. 4, the ECU 22 has a computing unit 22e and a switch unit 22s. The switch unit 22s is constructed of a relay and a semiconductor switch that are configured to switch the motor 26 to a normal rotation condition, a reverse rotation condition and a stop condition. The switch unit 22s is constructed to be switched to a normal rotation side when an ascent switch 23u (FIG. 3) is turned on, and to be switched to a reverse rotation side when a descent switch 23d is turned on. Further, the switch unit 22s is constructed to be switched to a stop side when both of the ascent switch 23u and the descent switch 23d are turned off or when a stop signal (which will be hereinafter described) is output from a computing unit 22e, so as to stop power feeding to the motor 26.

The computing unit 22e of the ECU 22 is configured to compute a rotating speed $N$ of the motor 26 each time at intervals of a predetermined time based on a load current value $Im$ (Vi) of the motor 26 and a power source voltage $Vb$ of the motor 26, and to compute a reclining angle $W$ of the seta back 45 based on the rotating speed $N$ obtained each time at intervals of the predetermined time, which will be hereinafter described. Further, as shown by chain double-dashed lines in FIG. 2, when the seat back 45 upwardly rotates to an upper limit position $Su$ until the reclining angle $W$ obtained by computing becomes equal to an upper limit angle $Wu$, the computing unit 22e outputs a stop signal to the switch unit 22s. Similarly, when the seat back 45 downwardly rotates to a lower limit position $Sd$ until the reclining angle $W$ becomes equal to a lower limit angle $Wd$, the computing unit 22e outputs the stop signal to the switch unit 22s.

Further, as shown in FIG. 3, the computing unit 22e is configured to receive a signal from an original point limit switch 14m, so as to set the reclining angle $W$ to a reference angle $Ws$ when the seat back 45 is in a reference position $S0$ (FIG. 2). Further, the original point limit switch 14m is configured to be turned on when the seat back 45 is positioned in a range between the reference position $S0$ (indicated by solid line) and the upper limit position $Su$, and to be turned off when the seat back 45 is positioned in some other range.

<Regarding Method of Computing Reclining Angle W>

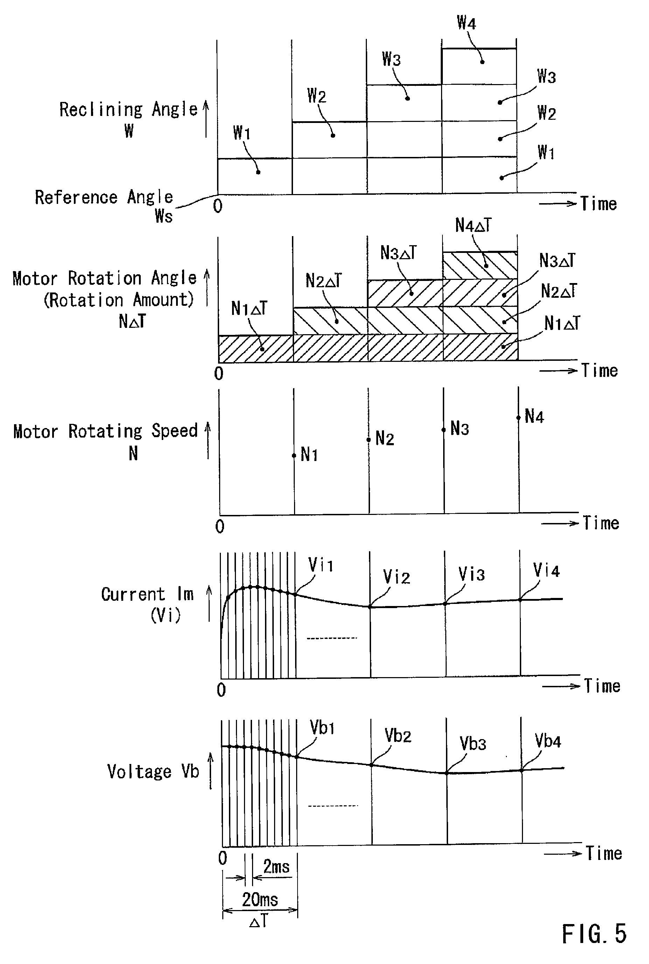

Next, a method of computing the reclining angle W will be described with reference to a case in which the ascent switch 23u is turned on when the seat back 45 is positioned in the reference position S0 (FIG. 2). When the ascent switch 23u is turned on to rotate the motor 26 in a normal direction, as shown in FIG. 5, the load current value Im (Vi) of the motor 26 and the power source voltage of the motor 26 (a voltage value of the battery 25) are input to the computing unit 22e, for example, every 2 ms. Further, as shown in FIG. 4, the load current Im of the motor 26 is converted to a voltage Vi by a shunt resistance Rs provided to the ECU 22 before it is input to the computing unit 22e. In the computing unit 22e, the rotating speed N of the motor 26 is computed each time at intervals of a time $\Delta T$ ($\Delta T$ = 20 ms) based on characteristics of the DC brush motor. That is, in an electric circuit of FIG. 4, the power source voltage Vb can be expressed as an equation: Vb = (Rm + Ra) · Im + E ... (Equation 1). In Equation (1), Ra is an internal resistance (an armature resistance) of the motor 26. Rm is a circuit resistance other than the internal resistance and corresponds to a value including the shunt resistance Rs. Further, E is an induced electromotive force of an armature A and can be expressed as a function of the rotating speed N of the armature A (the rotating speed N of the motor 26). That is, the induced electromotive force E can be expressed as an equation: E = C x N. In the equation, C is a proportional constant. Therefore, when Equation 1 is changed, the rotating speed N of the motor 26 can be expressed as a following equation:

$$N = \text{Coefficient K1} \times Vb \;\square\; \text{Coefficient K2} \times Im$$
$$= \text{Coefficient K1} \times Vb \;\square\; \text{Coefficient K2} \times Vi \quad \dots \text{(Equation 2)}$$

In the computing unit 22e, the rotating speed N of the motor 26 is computed each time at intervals of the time $\Delta T$ ($\Delta T$ = 20 ms) based on Equation 2.

For example, as shown in FIG. 5, in a case in which a power source voltage value and the load current value at the time $\Delta T$ (20 ms) after actuation of the motor 26 are respectively Vb1 and Vi1, the computing unit 22e computes the rotating speed N1 of the motor 26 (N1 = Coefficient K1 × Vb1 □ Coefficient K2 × Vi1) based on the voltage value Vb1 and the load current value Vi1.

Next, the computing unit 22e computes a rotation angle N1$\Delta T$ when the motor 26 rotates for the time $\Delta T$ at the rotating speed of N1, and computes a reclining angle change amount W1 based on the rotation angle N1$\Delta T$. Further, because the reclining angle change amount W1 is a function of the rotation angle N1$\Delta T$ of the motor 26, the reclining angle change amount W1 can be expressed as an equation: W1 = Coefficient K3 × N1$\Delta T$. The Constant K3 is a constant number that is determined by a gear ratio or other such factors of the reclining mechanism 24.

Further, the computing unit 22e adds the reclining angle change amount W1 to the reference angle Ws. That is, the reclining angle W at the time $\Delta T$ (20 ms) after actuation of the motor 26 can be expressed as the reference angle Ws + W1 (an upper portion of FIG. 5).

Similarly, in a case in which the voltage value and the load current value at 2 x the time $\Delta T$ after actuation of the motor 26 are respectively Vb2 and Vi2, the computing unit 22e computes the rotating speed N2 of the motor 26 (N2 = Coefficient K1 × Vb2 □ Coefficient K2 × Vi2) based on the voltage value Vb2 and the load current value Vi2. Further, the computing unit 22e computes a rotation angle N2$\Delta T$ when the motor 26 rotates for the time $\Delta T$ at the rotating speed N2, and a reclining angle change amount W2 at that time, and then adds the reclining angle change amount W2 to the reference angle Ws + W1.

That is, the reclining angle W at 2 × the time $\Delta T$ (20 ms) after actuation of the motor 26 can be expressed as the reference angle Ws + W1 + W2.

Similarly, in a case in which the voltage value and the load current value at 3 × the time $\Delta T$ after actuation of the motor 26 are respectively Vb3 and Vi3, the computing unit 22e computes the rotating speed N3 of the motor 26 (N3 = Coefficient K1 × Vb3 □ Coefficient K2 × Vi3) based on the voltage value Vb3 and the load current value Vi3. Further, the computing unit 22e computes a rotation angle N3$\Delta T$ when the motor 26 rotates for the time $\Delta T$ at the rotating speed N3, and a reclining angle change amount W3 at that time, and adds the reclining angle change amount W3 to the reference angle Ws + W1 + W2.

That is, the reclining angle W at 3 × the time $\Delta T$ (20 ms) after actuation of the motor 26 can be expressed as the reference angle Ws + W1 + W2 + W3.

Thus, while the motor 26 is being driven, the rotating speed N of the motor 26, a rotation angle N$\Delta T$ and the reclining angle change amount W1, W2 ... are computed each time at intervals of the predetermined time $\Delta T$, so that the reclining angle W can be obtained.

<Regarding Operation of Reclining Device 20>

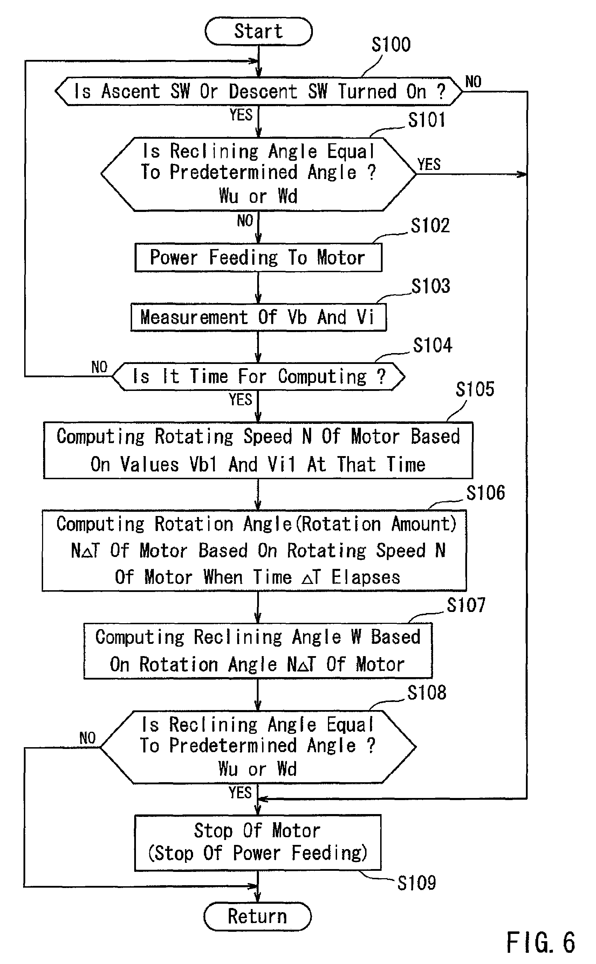

Next, an operation of the reclining device 20 will be described with reference to a flowchart of FIG. 6. Further, it is assumed that a processing shown in the flowchart of FIG. 6 is repeatedly executed, for example, every 2 ms in the computing unit 22e of the ECU 22.

First, when the ascent switch 23u is turned on in a condition in which the seat back 45 is positioned in the reference position S0 (the reclining angle W = Ws) (YES in Step S100; NO in Step S101), the motor 26 is actuated in a normal rotating direction (Step S102). Further, the voltage value Vb of the motor 26 and the load current value Vi at that time are input to the computing unit 22e (Step S103). Next, it is determined whether it is time for computing or not (i.e., whether the time ∆T (20 ms) has elapsed or not) (NO in Step S104), and the processing is returned to Step S100. Further, processes from Step S100 to Step S104 are repeatedly executed until it becomes time for computing, i.e., until the time ∆T (20 ms) elapses after the motor 26 is actuated.

Thus, as shown in FIG. 5, when it becomes time for computing (YES in Step S104), the rotating speed N1 of the motor 26 is computed based on the voltage value Vb1 and the load current value Vi1 at that time (Step S105, FIG. 5). Next, the rotation angle N1∆T when the motor 26 has rotated for the time ∆T at the rotating speed N1 and the reclining angle change amount W1 at that time are computed. Thereafter, the reclining angle change amount W1 is added to the reference angle Ws. That is, the reclining angle W (the reference angle Ws + W1) at the time ∆T (20 ms) after actuation of the motor 26 is computed (Step S106 and Step S 107).

When the computed reclining angle W is not the upper limit angle Wu (NO in Step S108), the processing is returned to Step S100. Further, while the motor 26 is actuated in the normal rotating direction, processes from Step S100 to Step S108 are repeatedly executed. When the computed reclining angle W becomes equal to the upper limit angle Wu (YES in Step S108), the switch unit 22s of the ECU 22 is switched to the stop side, so that the power feeding to the motor 26 is stopped (Step S109). As a result, the seat back 45 is maintained in the upper limit position Su.

Further, if the ascent switch 23u is further turned on after the reclining angle W becomes equal to the upper limit angle Wu, determination in Step S100 is YES. Therefore, it is determined in Step S101 again whether the reclining angle W is the upper limit angle Wu or not. At this time, determination in Step S101 is YES. Therefore, the processing advances to Step S109, so that the power feeding to the motor 26 can be continued to be stopped in Step S109.

When the ascent switch 23u is turned off before the reclining angle W becomes equal to the upper limit angle Wu (NO in Step S100), the power feeding to the motor 26 is stopped at that point (Step S109). As a result, the seat back 45 is maintained in this position.

Also, in a case in which the descent switch 23d is turned on in a condition in which the seat back 45 is positioned in the reference position S0 (the reclining angle W = Ws), reclining control can be performed in the same manner as when the ascent switch 23u is operated. Further, in a case in which the seat back 45 is rotated (lowered) downwardly from the reference position S0, the reclining angle W can be obtained by subtracting the reclining angle change amount W1, W2 ... from the reference angle Ws.

Even in a case in which the seat back 45 is in a position other than the reference position S0, when the ascent switch 23u is turned on, the reclining angle W can be obtained by adding the reclining angle change amount W1, W2 ... to a reclining angle Wx at that position. Further, when the descent switch 23d is turned on, the reclining angle W can be obtained by subtracting the reclining angle change amount W1, W2 ... from the reclining angle Wx at that position.

The seat back 45 corresponds to a construction member of the vehicle seat according to the present invention, and the computing unit 22e of the ECU 22 corresponds to a current detection means, a voltage detection means and a position computing means according to the present invention. Further, the shunt resistance Rs of the ECU 22 corresponds to the current detection means according to the present invention.

Further, the ascent switch 23u and the descent switch 23d correspond to operation switches according to the present invention.

Further, the upper limit angle Wu and the lower limit angle Wd of the seat back 45 correspond to predetermined positions of the construction member of the present invention.

<Advantages of Vehicle Seat 10>

According to the vehicle seat 10 of the present embodiment, the rotating speed N of the motor 26 is computed utilizing the load current value Im (Vi) of the motor 26. Therefore, even when a load of the motor 26 is increased or reduced due to a weight of a sitting person or other such factors, the rotating speed N of the motor 26 can be computed accurately. In addition, because the reclining angle W is computed based on the rotating speed N, the reclining angle W can be obtained accurately.

As a result, it is possible to omit devices for detecting the reclining angle W, e.g., a pulse sensor to be attached to the motor 26 and a pulse integration means. Thus, it is possible to achieve a reduction in cost due to the omission.

Further, even in the condition in which the ascent switch 23u or the descent switch 23d is turned on, the power feeding to the motor 26 can be stopped when the reclining angle W becomes equal to the upper limit angle Wu or the lower limit angle Wd. Thus, unnecessary power cannot be supplied to the motor 26. This may avoid waste. Further, the motor 26 can be prevented from being applied with an excessive force.

<Modified Forms>

Further, the present invention is not limited to the embodiment described above and can be modified without departing from the scope of the present invention. For example, in the present embodiment, the rotating speed N of the motor 26 is computed based on the voltage value Vb and the load current value Vi of the motor 26 each time at intervals of the time $\Delta T$. However, it is also possible to obtain an average of voltage values Vb and an average of load current values Vi of the motor 26 in the time $\Delta T$ and to compute the rotating speed N of the motor 26 based on an averaged voltage value Vbav and an averaged current value Viav. According to this, computing precision of the rotating speed N of the motor 26 can be increased.

Further, in the present embodiment, the rotating speed N of the motor 26 is obtained from the voltage value Vb and the load current value Vi. Further, the rotation angle $N\Delta T$ of the motor 26 for the time $\Delta T$ is obtained from the rotating speed N. Further, the reclining angle W is obtained based on the rotation angle $N\Delta T$. However, it is also possible to previously compute a relationship between the rotating speed N and the rotation angle $N\Delta T$ of the motor 26 and the reclining angle W, and to directly obtain the reclining angle W from the voltage value Vb and the load current value Vi of the motor 26 obtained each time at intervals of the time $\Delta T$.

Further, in the present embodiment, although the present invention is applied to the reclining device 20 of the vehicle seat 10, the present invention can be applied to a seat slide device or a seat rotating device instead of the reclining device 20.

[Embodiment 2]

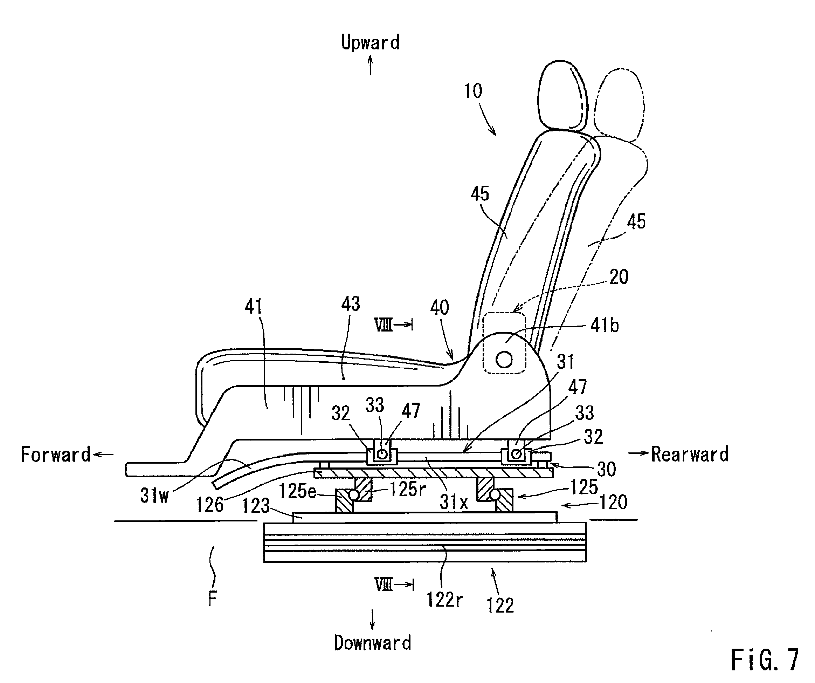

In the following, a vehicle seat according to Embodiment 2 of the present invention will be described with reference to FIGS. 7 to 12.

Further, forward and rearward, rightward and leftward, and upward and downward in the drawings respectively correspond to forward and rearward, rightward and leftward, and upward and downward of a passenger vehicle in which a vehicle seat is disposed. Further, forward and rearward, rightward and leftward, and upward and downward referred to in the specification also correspond to forward and rearward, rightward and leftward, and upward and downward as defined above.

<Outline of Vehicle Seat 10>

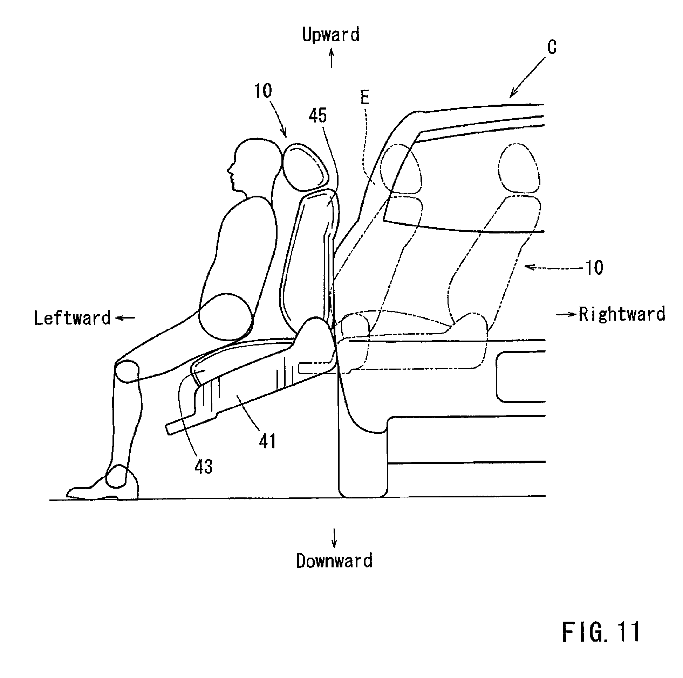

As shown in FIG. 11, the vehicle seat 10 according to the present embodiment is a seat (a passenger seat or other such seats) that is constructed such that a person can get in and out of a passenger vehicle C from a left side via a left side door opening E.

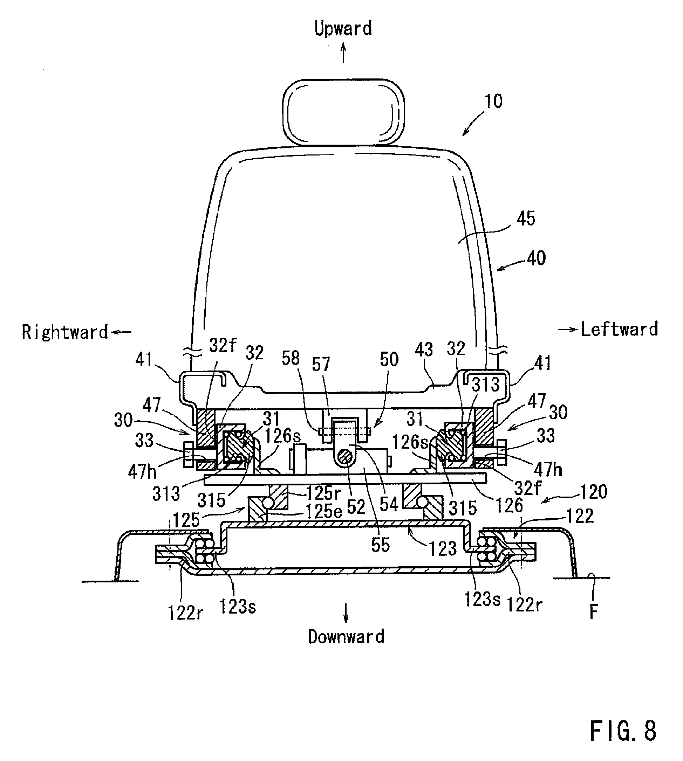

As shown in FIGS. 7 and 8, the vehicle seat 10 has a seat main body 40, a slide rotation mechanism 120 that is configured to horizontally rotate the seat main body 40 from a vehicle forward-facing position to a laterally-facing position facing the door opening E while longitudinally sliding the same, and an outer slide mechanism 30 that is configured to slide the seat main body 40 positioned in the laterally-facing position toward a vehicle exterior with respect to a rotative table 126 of the slide rotation mechanism 120.

As shown in FIG. 7 and others, the seat main body 40 is composed of a seat frame 41, a seat cushion 43 disposed on the seat frame 41, a seat back 45 that is vertically rotatably connected to a rear end portion 41b of the seat frame 41, and a reclining device 20 for adjusting inclination of the seat back 45.

<Regarding Slide Rotation Mechanism 120>

The slide rotation mechanism 120 is configured to leftwardly horizontally rotate the seat main body 40 while forwardly sliding the same to avoid a center pillar (not shown) when a passenger gets out of the vehicle. As shown in FIGS. 7 and 8, the slide rotation mechanism 120 is composed of a slide mechanism 122 that is capable of longitudinally sliding a slide table 123 on a vehicle floor F, and a rotation mechanism 125 that is capable of horizontally rotating the rotative table 126 on the slide table 123. The slide mechanism 122 has a pair of right and left stationary rails 122r that extend in a longitudinal direction on the vehicle floor F. As shown in FIG. 8, sliding plate portions 123s formed in right and left end edges of the slide table 123 are slidably fitted in the stationary rails 122r. Further, disposed between the stationary rails 122r and the slide table 123 is a drive mechanism (not shown) for longitudinally sliding the slide table 123. The drive mechanism is constructed of a motor or other such devices.

The rotation mechanism 125 is composed of an inner ring 125r an outer ring 125e that are coupled to each other so as to be rotated relative to each other about an axis, and a drive mechanism such as a motor (not shown) for rotating the two rings 125e and 125r relative to each other about the axis. Further, a lower surface of the outer ring 125e is secured to an upper surface of the slide table 123, and an upper surface of the inner ring 125r is secured to a lower surface of the rotative table 126.

<Outline of Outer Slide Mechanism 30>

The outer slide mechanism 30 is disposed on the rotative table 126. The outer slide mechanism 30 is a mechanism that is configured to slide the seat main body 40 toward the vehicle exterior with respect to the rotative table 126 when the seat main body 40 is horizontally rotated to the laterally-facing position facing the door opening E. As shown in FIGS. 7 and 8, the outer slide mechanism 30 is composed of a pair of right and left slide rails 31 that extend in a longitudinal direction of the rotative table 126 on the rotative table 126, two sets of sliders 32 that are slidable along the slide rails 31 and are connected to the seat main body 40, and a drive mechanism 50 that is capable of generating power for sliding the seat main body 40 with respect to the rotative table 126.

<Regarding Slide Rails 31 of Outer Slide Mechanism 30>

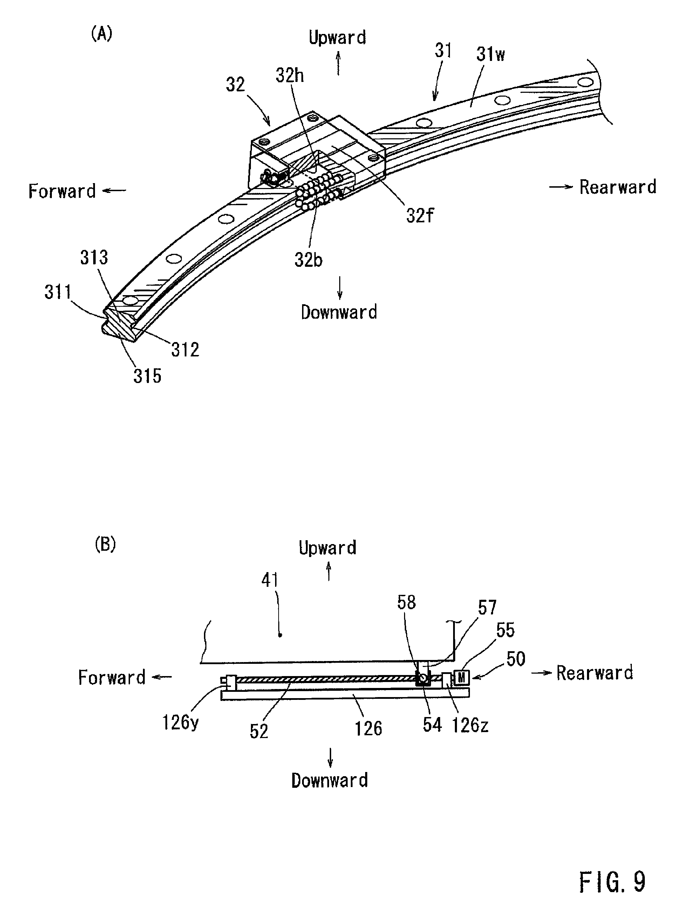

As shown in FIG. 7 and others, each of the slide rails 31 includes a rail straight portion 31x extending in a sliding direction, and an arcuate rail curved portion 31w that is downwardly curved in a distal end side of the rail straight portion 31 x. Further, as shown in FIG. 9(A), each of the slide rails 31 has a substantially V-shaped upper groove 311 and a substantially V-shaped lower groove 312 that are formed in an upper surface and a lower surface thereof. The upper groove 311 and the lower groove 312 are positioned in a center in a thickness direction (a width direction) of each of the slide rails 31 so as to extend in a longitudinal direction thereof. Further, slide support portions 313 along which sliders 32 can slide are respectively formed in the slide rails 31. Each of the slide support portion 313 is positioned in a widthwise outer side (an upper side in FIG. 9(A)) with respect to the upper groove 311 and the lower groove 312. Each of the slide support portions 313 is fitted to a recess 32h of each of the sliders 32 with interleaving a plurality of ball bearings 32b. As a result, each of the sliders 32 can smoothly move from the rail straight portion 31x to the rail curved portion 31w of each of the slide rails 31 along the slide support portion 313 that is formed in an outer side surface of each of the slide rails 31.
Further, stationary rail portions 315 are respectively formed in the slide rails 31. Each of the stationary rail portions 315 is positioned in a widthwise inner side (a lower side in FIG. 9(A)) with respect to the upper groove 311 and the lower groove 312. As shown in FIG. 8, the stationary rail portions 315 of the slide rails 31 are respectively laterally supported by support members 126s that are secured to an upper surface of the rotative table 126.

<Regarding Sliders 32 and Others of Outer Slide Mechanism 30>

As shown in FIG. 9(A), each of the sliders 32 is formed to have a rectangular shape when viewed from an obverse surface 32f thereof. The recess 32h is formed in a reverse surface of each of the sliders 32. As shown in FIG. 8, in a condition in which the recess 32h of each of the sliders 32 is fitted in the slide support portion 313 of each of the slide rails 31, the obverse surface 32f of each of the sliders 32 can be positioned vertically. Further, the obverse surfaces 32f of the sliders 32 are configured such that connection pins 33 to be used for connection with leg portions 47 of the seat main body 40 can be secured thereto at a right angle.
As shown in FIG. 7, the leg portions 47 each having an elongated plate-shape are attached to each of the left and right end portions (both end portions in a width direction) of the seat frame 41 of the seat main body 40. The leg portions 47 are positioned in a central portion and a rear portion of each of the left and right end portions of the seat frame 41 so as to downwardly protrude along an outer surfaces of the seat frame 41. Further, connection holes 47h (FIG. 8) through which the connection pins 33 of the sliders 32 are passed are formed in central positions of the leg portions 47.
That is, the connection pins 33 are passed through the connection holes 47h of the leg portions 47 and are secured to the obverse surfaces 32f of the sliders 32, so that the sliders 32 can be vertically rotatably connected to the leg portions 47.

<Regarding Drive Mechanism 50 of Outer Slide Mechanism 30>

As shown in FIGS. 8 and 9(B), the drive mechanism 50 is a mechanism that generates power utilizing threadably engagement action of a screw shaft 52 and a nut 54. The screw shaft 52 is positioned parallel to the rail straight portion 31x of each of the slide rails 31. As shown in FIG. 9(B), a front end portion and a rear end portion of the screw shaft 52 are respectively rotatably supported by front and rear bearing portions 126y and 126z disposed on the rotative table 126. Further, the rear end portion of the screw shaft 52 is connected to an output shaft of a speed reduction mechanism of a motor 55.
Further, the nut 54 is threadedly engaged with the screw shaft 52. As shown in FIG. 8, the nut 54 is vertically rotatably connected to a nut support portion 57 via a horizontal connection pin 58. The nut support portion 57 is attached to a rear lower end of the seat frame 41.

According to the construction described above, when the screw shaft 52 rotates in a normal direction due to actuation of the motor 55, the nut 54 advances along the screw shaft 52 by the threadably engagement action of the screw shaft 52 and the nut 54. As a result, the seat frame 41 (the seat main body 40) connected to the nut 54 via the nut support portion 57 is applied with a biasing force in an advancing direction from the nut 54, so that the seat main body 40 advances along the right and left slide rails 31 by action of the sliders 32. Conversely, when the screw shaft 52 rotates in a reverse direction due to reverse actuation of the motor 55, the seat main body 40 retreats along the right and left slide rails 31 contrary to the above case.

<Operation of Vehicle Seat 10 According to the Present Embodiment>

First, an operation of the vehicle seat 10 when the passenger gets out of the vehicle will be described.

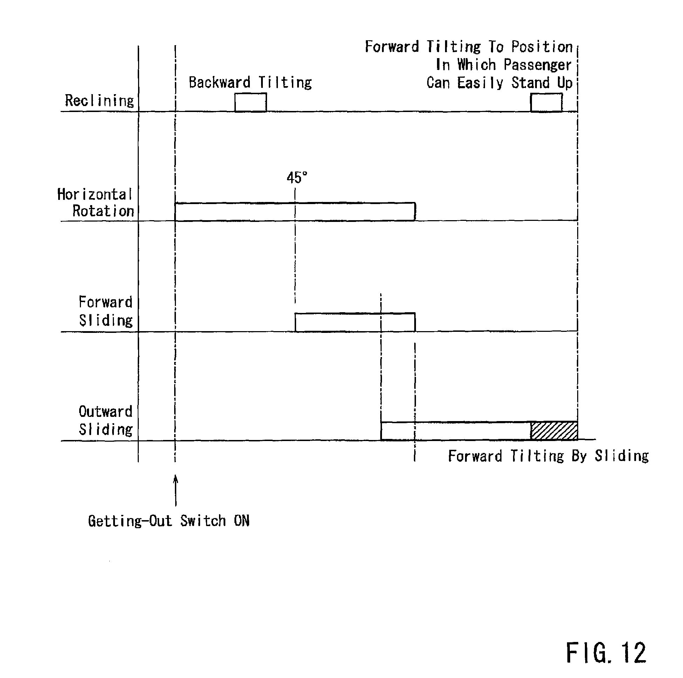

When the passenger gets out of the vehicle, the passenger unfastens a seatbelt and then operates a getting-out switch (not shown) while a left door is opened. As a result, as shown in FIG. 12, the rotation mechanism 125 of the slide rotation mechanism 120 is fist actuated, so that the seat main body 40 can be rotated horizontally to the left. Thereafter, when a left front end portion of the seat main body 40 comes closer to the door opening E due to rotation of the seat main body 40 by a predetermined angle, the reclining device 20 of the seat main body 40 is actuated, so that the seat back 45 can be gradually tilted rearwards. As a result, the upper half of the body of the passenger leaning on the seat back 45 is tilted backwards, so that the passenger's head can be lowered. Thus, the passenger's head can be prevented from easily hitting a ceiling portion of the door opening E.

Subsequently, when the seat main body 40 rotates to the left by approximately 45 degrees, the slide mechanism 122 of the slide rotation mechanism 120 is actuated. As a result, the seat main body 40 rotates to the left while sliding forwards due to action of the rotation mechanism 125 and the slide mechanism 122 of the slide rotation mechanism 120, so as to face the door opening E while avoiding the center pillar (not shown). Next, immediately before the slide rotation mechanism 120 is stopped, the outer slide mechanism 30 is actuated, so that the seat main body 40 moves to the vehicle exterior with respect to the rotative table 126 via the door opening E.

That is, the motor 55 of the outer slide mechanism 30 is driven, so that the screw shaft 52 can rotates in the normal direction. As a result, the nut 54 advances along the screw shaft 52 by the threadably engagement action of the screw shaft 52 and the nut 54. As a result, the seat main body 40 is applied with the biasing force in the advancing direction from the nut 54, so that the seat main body 40 advances along the right and left slide rails 31 by the action of the sliders 32.

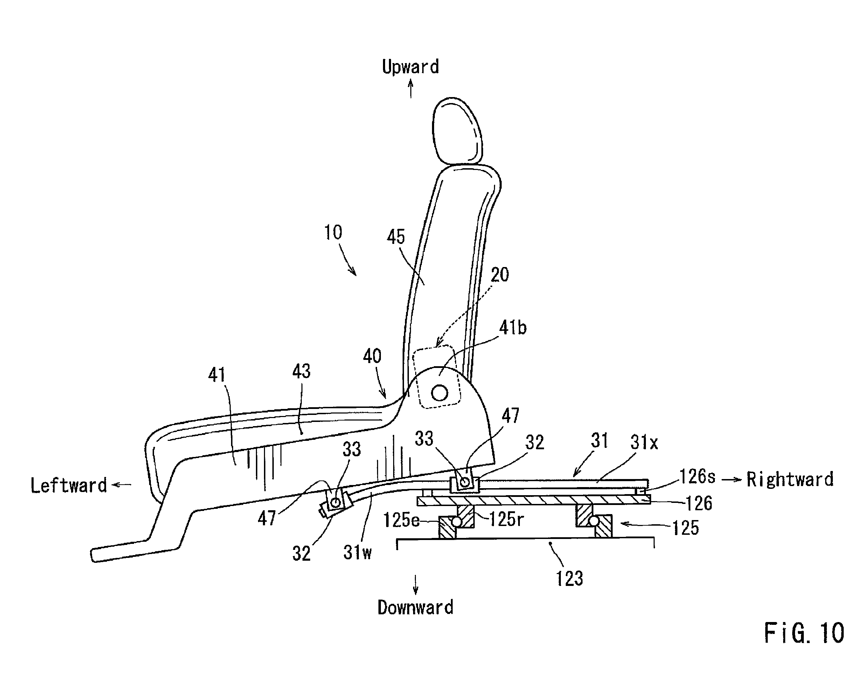

Further, because each of the slide rails 31 consists of the horizontal rail straight portion 31x except for a distal end portion thereof, the seat main body 40 can move from a vehicle interior to the vehicle exterior while keeping the same height. Thereafter, as shown in FIG. 10, when the seat main body 40 moves to the vehicle exterior via the door opening E, the front sliders 32 of the seat main body 40 advance along the rail curved portions 31w of the slide rails 31. As a result, the seat cushion 43 of the seat main body 40 can be gradually tilted such that a front side thereof can be lowered. Further, at this time, the reclining device 20 of the seat main body 40 is operated, so that the seat back 45 can be gradually tilted forwards to be restored to a position in which the passenger can easily stand up.

Thus, as shown in FIG. 11, the passenger can gently get the feet on the ground and stand up while the passenger stretches the knees from a relatively high position. Further, at this time, because the seat back 45 of the seat main body 40 can support the upper half of the body of the passenger while forwardly pressing the same, the passenger can easily stand up.

Further, in a case in which the seat main body 40 is returned to an original position in the vehicle interior from the vehicle exterior, the outer slide mechanism 30, the slide rotation mechanism 120 and the other mechanisms are operated in reverse order.

<Advantages of Vehicle Seat 10 According to the Present Embodiment>

According to the vehicle seat 10 of the present embodiment, the rail straight portions 31x of the slide rails 31 of the outer slide mechanism 30 extend horizontally. Therefore, the seat main body 40 can be moved from the vehicle interior to the vehicle exterior while keeping the same height. That is, the seat main body 40 in the vehicle exterior may have the same height as the seat main body 40 in the vehicle interior, so that a height dimension from the ground to a sitting position of the seat main body 40 can be relatively increased.

Further, when the sliders 32 of the seat main body 40 slide along the rail curved portions 31 w of the slide rails 31 toward distal ends thereof, the seat cushion 43 can be gradually tilted in a direction in which the front side thereof is lowered in the vehicle exterior. As a result, the passenger sitting in the seat cushion 43 can gently lower the feet to the ground and stand up while the passenger stretches the knees from the relatively high position. Thus, because the passenger can get in and out of the vehicle while stretching the knees stretched, for example, an aged person with weak leg muscles can get in and out of the vehicle unaided.

Further, because the sliders 32 are vertically rotatably connected to the seat main body 40, the sliders 32 can be smoothly slid from the rail straight portions 31x of the slide rails 31 to the rail curved portions 31 w of the slide rails 31. Further, since two sliders 32 are slidably fitted to each of the slide rails 31, the seat main body 40 can be supported at four points by the sliders 32, thereby increasing stability of the seat main body 40.

Further, the seat main body 40 is provided with the reclining device 20 that is configured to adjust the inclination of the seat back 45 with respect to the seat cushion 43. Therefore, when the seat cushion 43 of the seat main body 40 is gradually tilted in the direction in which the front side thereof is lowered in the vehicle exterior, the inclination of the seat back 45 can be adjusted such that the passenger can be easily stand up.

<Modified Forms>

Further, the present invention is not limited to the embodiment described above and can be modified without departing from the scope of the present invention. For example, in the vehicle seat 10 of the present embodiment, the mechanism utilizing the threadably engagement action of the screw shaft 52 and the nut 54 is exemplified as the drive mechanism 50 of the outer slide mechanism 30. However, a mechanism utilizing a rack-and-pinion device or other such devices can be used.

Further, in the present embodiment, the seat back 45 can be tilted forwards by the reclining device 20 when the seat cushion 43 of the seat main body 40 is tilted in the direction in which the front side thereof is lowered after the seat main body 40 is slid to the vehicle exterior. However, according to passenger's preference, the seat back 45 can be maintained in a predetermined angle or can be tilted backwards in order to mitigate an oppressive feeling of the passenger.

Further, in the present embodiment, the sliders 32 are connected to the side surfaces of the slide rails 31 while the recesses 32h thereof are faced laterally. However, the sliders 32 can be connected to upper surfaces of the slide rails 31 while the recesses thereof are faced downwards.

Further, Embodiment 2 can be understood as the following invention.

[Technical Field]

The present invention relates to a vehicle seat having a rotation mechanism that is configured to horizontally rotate a seat main body from a vehicle forward-facing position to a laterally-facing position facing a door opening, and an outer slide mechanism that is configured to slide the seat main body from a vehicle interior to a vehicle exterior via the door opening.

[Background Art]

A related vehicle seat is disclosed in Japanese Laid-Open Patent Publication No. 2008-179317.

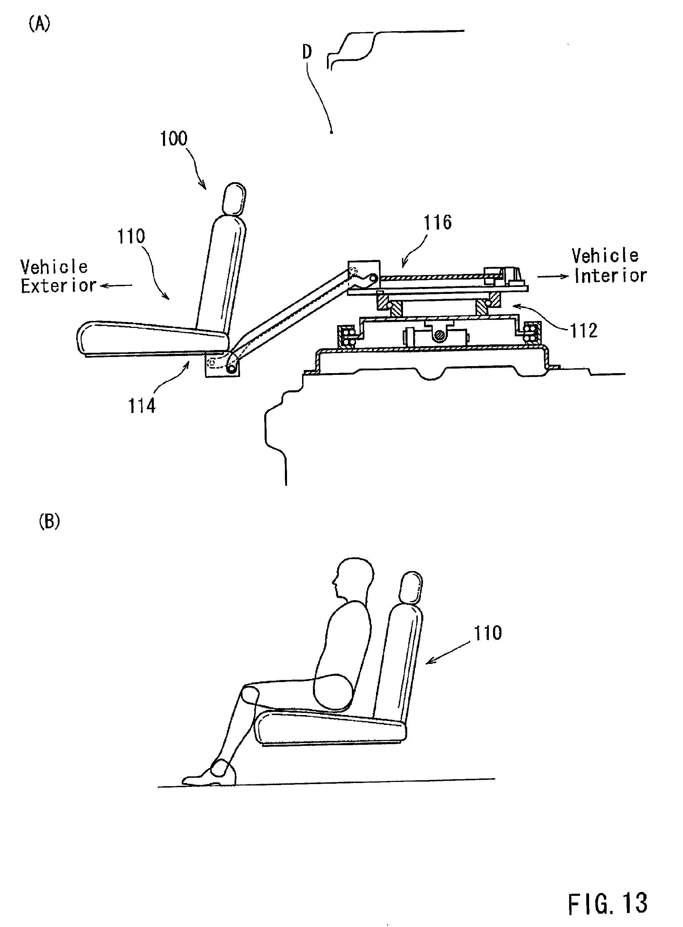

The vehicle seat 100 described in the Publication is a seat that is used by a passenger, a wheelchair user. As shown in FIG. 13(A), the vehicle seat has a rotation mechanism 112 that is configured to horizontally rotate a seat main body 110 from a vehicle forward-facing position to a laterally-facing position facing a door opening D, an outer slide mechanism 114 that is configured to move the seat main body 110 from a vehicle interior to a vehicle exterior via the door opening D, and an ascent/descent link mechanism 116 that is configured to ascend and descend the seat main body 110 between a vehicle cabin height position and a getting in/out position in the vehicle exterior.

In the vehicle seat 100, when the passenger gets out of a vehicle, the seat main body 110 is horizontally rotated by the rotation mechanism 112 from the vehicle forward-facing position to the laterally-facing position facing a door opening D and then is moved from the vehicle interior to the vehicle exterior by the outer slide mechanism 114. Thereafter, the seat main body 110 is lowered to the getting in/out position by the ascent/descent mechanism 116 (FIG. 13(B)). In this condition, the passenger can be transferred to the wheelchair (not shown) from the seat main body 110 with help of a helper. Further, a sitting position of the seat main body 110 in the getting in/out position is set to a relatively low position (approximately 450 mm from the ground) such that the helper can easily transfer the passenger to the wheelchair on the ground.

[Summary of the Invention]

[Problems to be Solved by the Invention]

However, there may be a case in which the passenger is an aged person or other such person with weak leg muscles and not the wheelchair user, and wishes to use the vehicle seat unaided. In such a case, if the sitting position of the seat main body 110 in the getting in/out position is low, when the passenger (the aged person or other such person) tries to stand up unaided, burden on the passenger's knees and back can be increased.

The present invention is made in order to solve the above problem. It is an object of the present invention to provide a vehicle seat in which a passenger, an aged person or other such person with weak leg muscles, can easily get in and out of a vehicle.

[Means for Solving the Problems]

The object described above can be solved by the invention as defined in each of the claims.
A first invention provides a vehicle seat which may include a rotation mechanism that is configured to horizontally rotate a seat main body from a vehicle forward-facing position to a laterally-facing position facing a door opening, and an outer slide mechanism that is configured to slide the seat main body from a vehicle interior to a vehicle exterior via the door opening, wherein the outer slide mechanism is composed of a pair of slide rails extended in a sliding direction and sliders supporting the seat main body, the sliders being slidable along the slide rails, wherein the slide rails respectively include horizontally extended rail straight portions and downwardly curved rail curved portions that are positioned in distal end sides of the rail straight portions, and wherein when the sliders supporting the seat main body slide along the rail curved portions of the slide rails toward distal ends thereof, the seat cushion of the seat main body can be gradually tilted in a direction in which a front side thereof is lowered in the vehicle exterior.
According to the present invention, the rail straight portions of the slide rails of the outer slide mechanism extend horizontally. Therefore, the seat main body can be moved from the vehicle interior to the vehicle exterior while keeping the same height. That is, the seat main body in the vehicle exterior may have the same height as the seat main body in the vehicle interior, so that a height dimension from the ground to a sitting position of the seat main body can be relatively increased.
Further, when the sliders of the seat main body slide along the rail curved portions of the slide rails toward distal ends thereof, the seat cushion can be gradually tilted in a direction in which the front side thereof is lowered in the vehicle exterior. As a result, the passenger sitting in the seat cushion can gently lower the feet to the ground and stand up while the passenger stretches the knees from a relatively high position. Thus, because the passenger can get in and out of the vehicle while stretching the knees stretched, for example, an aged person with weak leg muscles can get in and out of the vehicle unaided.
In a second invention, the sliders are vertically rotatably connected to the seat main body.
Thus, the sliders can be smoothly slid from the rail straight portions of the slide rails to the rail curved portions of the slide rails.
In a third invention, the seat main body has a reclining mechanism that is configured to adjust inclination of the seat back with respect to the seat cushion, wherein the seat back can be tilted by the reclining device when the seat cushion is gradually tilted in the direction in which the front side thereof is lowered in the vehicle exterior.
Thus, when the seat cushion of the seat main body is gradually tilted in the direction in which the front side thereof is lowered in the vehicle exterior, the inclination of the seat back can be adjusted such that the passenger can be easily stand up.

[Advantage of the Invention]

According to the present invention, an aged person or other such person with weak leg muscles can easily get in and out of a vehicle.

DESCRIPTION OF SYMBOLS

20  reclining device

22  ECU

22e  computing unit (current detection means, voltage detection means, and position computing means)

Rs  shunt resistance (current detection means)

23u  ascent switch (operation switch)

23d  descent switch (operation switch)

| 26 | motor |
| --- | --- |
| Im (Vi) | load current value |
| N | rotating speed |
| Vb | voltage value (power source voltage value) |
| W | reclining angle |
| Ws | reference angle |
| Wu | upper limit angle (predetermined position) |
| Wd | lower limit angle (predetermined position) |
| 125 | rotation mechanism |
| 30 | outer slide mechanism |
| 31 | slide rail |
| 31w | rail curved portion |
| 31x | rail straight portion |
| 32 | slider |
| 40 | seat main body |
| 43 | seat cushion |
| 45 | seat back (construction member) |
| E | door opening |

**Claims**

1. A vehicle seat configured to operate a construction member utilizing a rotative force of a motor, comprising:

   a current detection means configured to detect a load current of the motor;
   a voltage detection means configured to detect a power source voltage of the motor; and
   a position computing means configured to compute a rotating speed of the motor each time at intervals of a predetermined time utilizing the load current value detected by the current detection means and the voltage value detected by the voltage detection means, and to compute a position of the construction member based on the rotating speed computed each time at intervals of the predetermined time.

2. The vehicle seat as defined in claim 1, wherein the position computing means is configured to compute the rotating speed of the motor based on an averaged load current value in the predetermined time and an averaged power source voltage value in the predetermined time.

3. The vehicle seat as defined in any one of claims 1 and 2, wherein power feeding to the motor can be stopped when the position of the construction member computed by the position computing means becomes equal to a predetermined position in a condition in which an operating switch of the motor is turned on.

4. The vehicle seat as defined in any one of claims 1 to 3 comprising:

a seat back as the construction member, the seat back being configured to change an inclination angle thereof with respect to a seat cushion, and

a reclining device that is capable of adjusting the inclination angle of the seat back utilizing the rotative force of the motor.

5. The vehicle seat as defined in claim 4 further comprising a rotation mechanism that is configured to horizontally rotate a seat main body from a vehicle forward-facing position to a laterally-facing position facing a door opening, and an outer slide mechanism that is configured to slide the seat main body from a vehicle interior to a vehicle exterior via the door opening,

wherein the outer slide mechanism is composed of a pair of slide rails extended in a sliding direction and sliders supporting the seat main body, the sliders being slidable along the slide rails,

wherein the slide rails respectively include horizontally extended rail straight portions and downwardly curved rail curved portions that are positioned in distal end sides of the rail straight portions, and

wherein when the sliders supporting the seat main body slide along the rail curved portions of the slide rails toward distal ends thereof, the seat cushion of the seat main body can be gradually tilted in a direction in which a front side thereof is lowered in the vehicle exterior.

6. The vehicle seat as defined in claim 5, wherein the sliders are vertically rotatably connected to the seat main body.

7. The vehicle seat as defined in any one of claims 5 and 6, wherein the seat back can be tilted by the reclining device when the seat cushion is gradually tilted in the direction in which the front side thereof is lowered in the vehicle exterior.

Rightward

Rearward

10

40

45

43

Leftward

Forward

FIG. 1

Upward

Su

So

45

45

40

Sd

45

Forward

Rearward

43

C

Wd Ws Wu

Downward

FIG. 2

FIG. 3

FIG. 4

FIG. 5

Start

S100

Is Ascent SW Or Descent SW Turned On ? — NO

YES

S101

Is Reclining Angle Equal To Predetermined Angle ? Wu or Wd — YES

NO

S102

Power Feeding To Motor

S103

Measurement Of Vb And Vi

S104

NO — Is It Time For Computing ?

YES

S105

Computing Rotating Speed N Of Motor Based On Values Vb1 And Vi1 At That Time

S106

Computing Rotation Angle (Rotation Amount) NΔT Of Motor Based On Rotating Speed N Of Motor When Time ΔT Elapses

S107

Computing Reclining Angle W Based On Rotation Angle NΔT Of Motor

S108

NO — Is Reclining Angle Equal To Predetermined Angle ? Wu or Wd

YES

Stop Of Motor (Stop Of Power Feeding)

S109

Return

FIG. 6

FiG. 7

EP 2 514 630 A1

FIG. 8

(A)

Upward

31  31w

32  32h

Forward ←

→ Rearward

32f

32b

Downward

313

311

312

315

(B)

Upward

41

58  57

55

50

Forward ←

→ Rearward

126y  52  126  54 126z

Downward

FIG. 9

Upward

10
45
20
41b
40
41 43 47
33 33 32 31 31x
Leftward
126s → Rightward
47 126
32 125e 125r 125
31w 123

Downward

FiG. 10

Upward

Downward

Leftward ←

→ Rightward

10

45

E

C

10

41

43

FIG. 11

FIG. 12

(A)

D

100

110

Vehicle
Exterior ←

116

Vehicle
→ Interior

112

114

(B)

110

FIG. 13

<div align="center">**INTERNATIONAL SEARCH REPORT**</div>

| | International application No. |
|---|---|
| | PCT/JP2010/065300 |

**A. CLASSIFICATION OF SUBJECT MATTER**
*B60N2/20*(2006.01)i, *B60N2/06*(2006.01)i, *B60N2/14*(2006.01)i

According to International Patent Classification (IPC) or to both national classification and IPC

**B. FIELDS SEARCHED**

Minimum documentation searched (classification system followed by classification symbols)
B60N2/20, B60N2/06, B60N2/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-92166 A  (Delta Kogyo Co., Ltd.),<br>05 April 1994 (05.04.1994),<br>entire text; all drawings<br>(Family: none) | 1-7 |
| Y | JP 2000-333488 A  (Denso Corp.),<br>30 November 2000 (30.11.2000),<br>paragraphs [0062] to [0070]; fig. 8 to 12<br>& US 6335604 B1      & EP 1053928 A2<br>& DE 60035825 D | 1-7 |
| Y | JP 2007-99185 A  (Toyota Auto Body Co., Ltd.),<br>19 April 2007 (19.04.2007),<br>entire text; all drawings<br>(Family: none) | 4-7 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 October, 2010 (08.10.10) | 19 October, 2010 (19.10.10) |

| Name and mailing address of the ISA/<br>    Japanese Patent Office | Authorized officer |
|---|---|
| Facsimile No. | Telephone No. |

Form PCT/ISA/210 (second sheet) (July 2009)

## INTERNATIONAL SEARCH REPORT

| International application No. |
| --- |
| PCT/JP2010/065300 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 9-150655 A  (Fuji Kiko Co., Ltd.), 10 June 1997 (10.06.1997), paragraphs [0018] to [0033]; fig. 1 (Family: none) | 5-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009248839 A

- JP 2008179317 A